# EUROPEAN PATENT SPECIFICATION

(11) **EP 3 808 630 B1**
(45) Date of publication and mention of the grant of the patent: **30.07.2025**
(21) Application number: 20194505.2
(22) Date of filing: 04.09.2020
(51) Int. Cl.: B61L 25/02, B61L 15/00, B61L 27/00

(54) **WHEEL SLIDE INFORMATION GENERATING DEVICE, WHEEL SLIDE PREDICTING DEVICE, CONTROL DEVICE FOR BRAKE DEVICE AND WHEEL SLIDE INFORMATION GENERATING METHOD**
VORRICHTUNG ZUR ERZEUGUNG VON RADGLEITINFORMATIONEN, VORRICHTUNG ZUR VORHERSAGE DES RADSCHLUPFES, STEUERVORRICHTUNG FÜR DIE BREMSVORRICHTUNG UND VERFAHREN ZUR ERZEUGUNG VON RADGLEITINFORMATIONEN
DISPOSITIF DE PRODUCTION D'INFORMATIONS DE GLISSEMENT DE ROUE, DISPOSITIF DE PRÉVISION DE GLISSEMENT DE ROUE, DISPOSITIF DE COMMANDE POUR DISPOSITIF DE FREINAGE ET PROCÉDÉ DE PRODUCTION D'INFORMATIONS DE GLISSEMENT DE ROUE

(30) Priority: 17.10.2019 JP 2019189992
(43) Date of publication of application: 21.04.2021
(73) Proprietor: Nabtesco Corporation, Tokyo 102-0093 (JP)
(72) Inventor: HIROKAWA, Yuichi, Chiyoda-ku,, Tokyo 102-0093 (JP)
(74) Representative: Grünecker Patent- und Rechtsanwälte PartG mbB

(56) References cited:
- DE-A1- 102017 206 199
- GB-A- 2 541 710
- US-A1- 2005 140 144
- US-A1- 2006 244 830

## Description

The present invention relates to a wheel slide information generating device, a wheel slide predicting device, a control device for a brake device and a wheel slide information generating method.

DE 10 2017 206 199 A1 discloses a device for use with a railroad vehicle at least not having the features of the characterizing portion of claim 1.

A railroad vehicle disclosed in Japanese Patent Application Publication No. 2016-222054 (the ‴054 Publication") includes rotational speed sensors for detecting the rotational speed of axles onto which wheels are fixed. There are, in total, four rotational speed sensors corresponding to four axles.

The railroad vehicle disclosed in the '054 Publication detects the rotational speed of the four axles and calculates the differences between the detected values of the rotational speed. Based on the calculated differences between the values of the rotational speed, the railroad vehicle can detect whether wheel slide is occurring on the rail. The railroad vehicle disclosed in the '054 Publication attempts to, while wheel slide is occurring, take care of the ongoing wheel slide by reducing the braking force produced by the brake device.

The railroad vehicle disclosed in the '054 Publication may be capable of detecting wheel slide and controlling the braking force to address the ongoing wheel slide, but has no way of predicting where the wheels of the railroad vehicle are likely to slide.

The present invention is made in light of the above, and one object thereof is to predict the position where the wheels of a railroad vehicle slide. Said object is achieved by a device for use with a railroad vehicle according to claim 1 and a control method according to claim 7.

According to one aspect of the present disclosure, a device for use with a railroad vehicle, the device includes processing circuitry, and a memory coupled to the processing circuitry. The processing circuitry is configured to acquire position information of a railroad vehicle on a rail, determine, based on a rotational speed of a wheel of the railroad vehicle, whether the wheel is sliding, and store in the memory, as wheel slide information, position information of the railroad vehicle on the rail observed when the wheel has slid.

With the above configurations, the wheel slide information can be stored that includes the position information regarding the position where the wheel has slid. according to the invention, the stored wheel slide information iis aggregated and analyzed, so that the position where the wheel of the railroad vehicle slides can be predicted.

In the device having the above configurations, the wheel slide information may include at least one of speed information of the railroad vehicle observed when the wheel has slid, information indicative of deceleration of the railroad vehicle observed when the wheel has slid and information regarding a weight of the railroad vehicle observed when the wheel has slid.

In the device having the above configurations, the wheel slide information includes information that may affect the likelihood of the sliding of the wheel, such as the speed information of the railroad vehicle, the information indicative of the deceleration of the railroad vehicle, and the information regarding the weight of the railroad vehicle. The above configurations can accordingly contribute to improve the accuracy of the prediction of the sliding of the wheel based on the wheel slide information.

In the device having the above configurations, the wheel slide information may include weather information observed when the wheel has slid. The likelihood of the wheel slide of the railroad vehicle on the position where the wheel has slid varies depending on, for example, whether it is raining. With the above configurations, the sliding of the wheel can be predicted more accurately by using the wheel slide information. This is because the wheel slide information contains weather information that may affect the likelihood of the sliding of the wheel.

In the device having the above configurations, the processing circuitry is further configured to calculate, based on the wheel slide information, a predicted wheel slide position where the wheel possibly slides, and cause a report device of the railroad vehicle to issue a report based on a current position of the railroad vehicle on the rail and the predicted wheel slide position.

With the above configurations, the wheel slide information can be used to calculate and predict a predicted wheel slide position where the wheel of the railroad vehicle may possibly slide. The report device then reports the predicted wheel slide position. In this way, a driver or other passengers can more easily know that there is a predicted wheel slide position.

In the device having the above configurations, the processing circuitry is further configured to cause the report device to issue a report when a distance between the current position of the railroad vehicle on the rail and the predicted wheel slide position becomes equal to or less than a predetermined distance.

With the above configurations, when the railroad vehicle approaches the predicated wheel slide position, the report device reports that the railroad vehicle is approaching the predicted wheel slide position. This allows the driver or other passengers to easily know that the railroad vehicle is traveling near the predicted wheel slide position when the railroad vehicle approaches the predicted wheel slide position.

In the device having the above configurations, the processing circuitry is further configured to calculate, based on the wheel slide information, a predicted wheel slide position where the wheel possibly slides, and control a brake device of the railroad vehicle such that a deceleration rate of the railroad vehicle observed when the railroad vehicle is on the predicted wheel slide position is equal to or less than a predetermined deceleration rate.

With the above configurations, when the railroad vehicle is on the predicated wheel slide position, the deceleration rate of the railroad vehicle is limited. If the deceleration rate of the railroad vehicle is limited in this way, the brake device does not produce excessively strong braking force, which can prevent the railroad vehicle from experiencing wheel slide at the predicted wheel slide position.

In the device having the above configurations, the processing circuitry is further configured to calculate, based on the wheel slide information, a predicted wheel slide position where the wheel possibly slides, and control a brake device of the railroad vehicle such that a speed of the railroad vehicle observed when the railroad vehicle is on the predicted wheel slide position is equal to or less than a predetermined speed.

With the above configurations, when the railroad vehicle is on the predicated wheel slide position, the speed of the railroad vehicle is limited. Accordingly, it is less necessary to increase the braking force produced by the brake device at the predicted wheel slide position. Consequently, the wheel of the railroad vehicle can be prevented from sliding at the predicted wheel slide position.

According to one aspect of the present disclosure, a wheel slide information generating method includes steps of acquiring position information of a railroad vehicle on a rail, determining, based on a rotational speed of a wheel of the railroad vehicle, whether the wheel is sliding, storing in a storing unit, as wheel slide information, position information of the railroad vehicle on the rail observed when the wheel has slid.

In the above method, wheel slide information can be stored that includes position information on the position where the wheel has slid. Accordingly, for example, the stored wheel slide information can be aggregated and analyzed, so that the position where the wheel of the railroad vehicle slides can be predicted.
Fig. 1 is a schematic view showing the schematic configuration of a train having a plurality of vehicles coupled together relating to a first embodiment.
Fig. 2 is a schematic view illustrating the overall configuration of a wheel slide predicting system relating to the first embodiment.
Fig. 3 is a flow chart showing a series of controls to determine wheel slide, which are performed by a control device relating to the first embodiment.
Fig. 4 is a flow chart showing a series of controls to predict wheel slide, which are performed by the control device relating to the first embodiment.
Fig. 5 is a block diagram showing the controls to determine wheel slide and the controls to predict wheel slide relating to the first embodiment.
Fig. 6 is a schematic view showing the overall configuration of a wheel slide predicting system relating to a second embodiment.

### <First Embodiment>

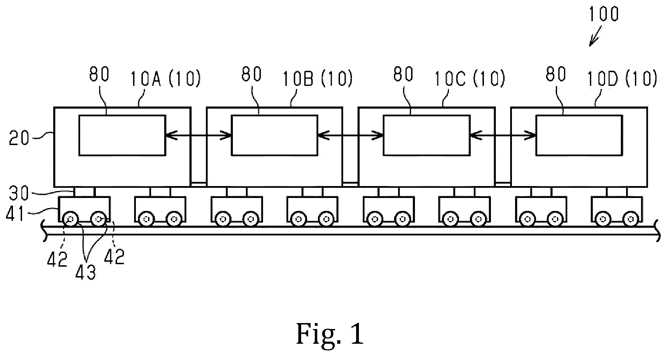

The following describes a first embodiment with reference to Figs. 1 to 5.

To begin with, the schematic configuration of a train 100, which is a railroad train, will be described.

As shown in Fig. 1, the train 100 includes four vehicles 10 coupled together, which are arranged next to each other in the front-and-back direction (the left-and-right direction in Fig. 1) of the train 100. The vehicles 10 are coupled such that each vehicle 10 is coupled to adjacent vehicles 10 in the front-and-back direction and identified by the reference numerals 10A, 10B, 10C and 10D in the stated order from the front side. Each vehicle 10 has substantially the same configuration and the following thus specifically describes only the vehicle 10A.

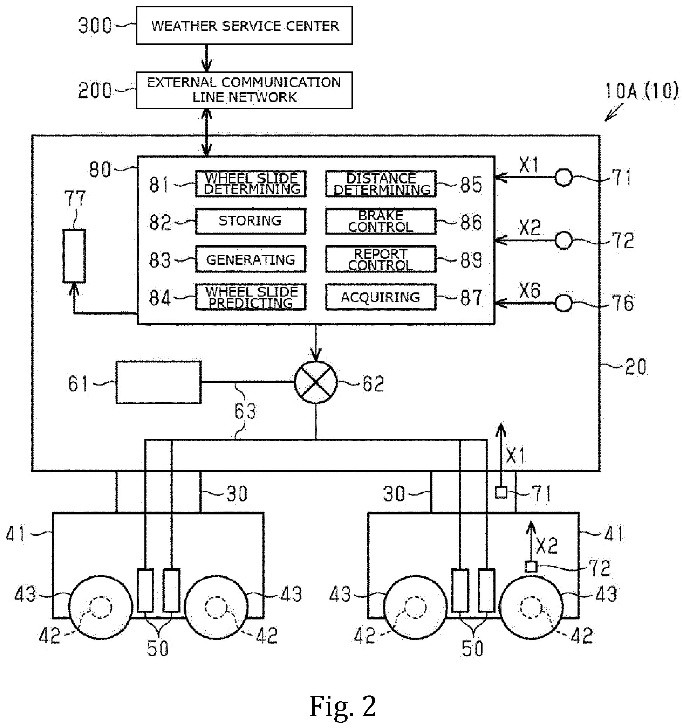

As shown in Fig. 2, the vehicle 10A includes two bogies 41 spaced away from each other in the front-and-back direction (the left-and-right direction in Fig. 2) of the vehicle 10A. Each bogie 41 has axles 42 attached thereto in a rotatable manner. The axles 42 extend in the width direction (the direction orthogonal to the plane of paper in Fig. 2). For each bogie 41, two axles 42 are provided and spaced away from each other in the front-and-back direction. On both ends of each axle 42, wheels 43 substantially shaped like a disk are fixed. Accordingly, each bogie 41 has four wheels 43 provided. In Fig. 1, the reference numerals are appended to only some of the bogies 41, axles 42 and wheels 43.

As shown in Fig. 2, air springs 30, which utilize elastic force provided by compressed air to absorb vibration, are attached on the upper side of the bogies 41. A vehicle body 20 is attached on the upper side of the air springs 30. The vehicle body 20 bounds an in-vehicle space. The vehicle body 20 is as a whole shaped like a rectangular parallelepiped box and has a long dimension in the front-and-back direction of the vehicle 10A. In Fig. 1, the reference numerals are appended to some of the air springs 30 and vehicle bodies 20.

As shown in Fig. 2, a brake device 50 is attached to each bogie 41. The brake device 50 is designed to slow the rotation of the wheel 43. The brake device 50 is of a tread brake type and configured to slow the rotation of the wheel 43 by bringing the brake shoe serving as a frictional member into contact with the wheel tread of the wheel 43 or the outer peripheral surface. The vehicle 10A has, in total, eight brake devices 50 attached thereto, which correspond to the eight wheels 43. Fig. 2 only shows four wheels 43 and four brake devices 50, which are positioned on one of the sides defined in the width direction.

The vehicle 10A has an air supply source 61 attached thereto. The air supply source 61 is configured to supply compressed air. The air supply source 61 has a supply channel 63 extending therefrom. The supply channel 63 branches into eight in the middle, and each branch channel is connected to one of the eight brake devices 50. To the supply channel 63, a control valve 62 is attached that is configured to control the amount of the air distributed through the supply channel 63. The control valve 62 is arranged on the air supply source 61 side with respect to the origin of the branches in the supply channel 63. This means that one control valve 62 is provided for the eight brake devices 50. The air supply source 61 is also connected to the air springs 30 through channels, which are not illustrated. The air springs 30 receive compressed air supplied from the air supply source 61.

Inside the vehicle body 20, a display 77 is attached, which serves as a report device. The display 77 displays a variety of information to transmit information to, for example, the driver of the train 100. The display 77 is installed only in the vehicles 10A and 10D, from among the vehicles 10A to 10D.

Each of the above-described air springs 30 has a pressure sensor 71 attached thereto in order to detect the air pressure X1 of the air spring 30. The above-described bogies 41 have rotation sensors 72 attached thereto in order to detect the axial rotational speed X2, which represents the rotational speed of the axles 42. Each rotation sensor 72 is arranged in the vicinity of a corresponding one of the axles 42, and the vehicle 10A has, in total, four rotation sensors 72 provided. Fig. 2 shows only one of the rotation sensors 72.

In the vehicle 10A having the above-described configurations, the brake devices 50 are controlled by a control device 80. The control device 80 receives, from the pressure sensors 71, signals indicative of the values of the air pressure X1 of the air springs 30, which are detected by the pressure sensors 71. The control device 80 acquires the total weight Y1 of the vehicle body 20 based on the values of the air pressure of the air springs 30. Here, the total weight Y1 of the vehicle body 20 is the total sum of the weight of the vehicle body 20 itself and the weight of the passengers and the like in the vehicle body 20. The control device 80 also receives, from the rotation sensors 72, signals indicative of the values of the axial rotational speed X2 of the axles 42, which are detected by the rotation sensors 72. Since the vehicle 10A has, in total, the four rotation sensors 72 as described above, the control device 80 receives from each rotation sensor 72 the signal indicative of the axial rotational speed X2.

The control device 80 also receives a signal indicative of a brake instruction X6 from a brake controller 76, which is operated by the driver of the train 100. The brake controller 76 includes a lever configured to be operated by the driver. The brake controller 76 has a plurality of notches corresponding to different levels for defining the position to which this lever is to be operated and is configured to output a signal indicative of the brake instruction X6 corresponding to the position of the lever, which results from the operation of the lever by the driver. The brake instruction X6 increases in steps depending on the position of the lever, which results from the operation of the lever by the driver.

The control device 80 is capable of communicating with a weather service center 300 via an external communication line network 200. The control device 80 acquires weather information from the weather service center 300. Here, the weather information includes information regarding weather such as rain. The weather information also includes information regarding the current time.

The control device 80 includes a wheel slide determining unit 81 for determining whether the wheels 43 of the vehicle 10 are sliding. The wheel slide determining unit 81 determines, based on the axial rotational speed X2, whether the wheels 43 of the vehicle 10 are sliding (a wheel slide determining step). The wheel slide determining step is performed by the wheel slide determining unit 81.

The control device 80 includes a storing unit 82 for storing wheel slide information of the vehicle 10. The wheel slide information includes the following plurality of items. The first item of the wheel slide information is position information associating the position of the vehicle 10 on the rail where the wheels 43 of the vehicle 10 have slid with the fact that the wheels 43 of the vehicle 10 have slid. The second item of the wheel slide information is speed information associating the speed of the vehicle 10 observed when the wheels 43 of the vehicle 10 have slid with the fact that the wheels 43 of the vehicle 10 have slid. The third item of the wheel slide information is deceleration information associating the deceleration of the vehicle 10 observed when the wheels 43 of the vehicle 10 have slid with the fact that the wheels 43 of the vehicle 10 have slid. The brake instruction X6 determined by the position of the lever resulting from the operation of the lever by the driver is employed as the deceleration information. The fourth item of the wheel slide information is weight information associating the weight of the vehicle 10 observed when the wheels 43 of the vehicle 10 have slid with the fact that the wheels 43 of the vehicle 10 have slid. The total weight Y1 of the vehicle body 20 is employed as the weight information. The fifth item of the wheel slide information is weather information associating weather information regarding the position of the vehicle 10 on the rail where the wheels 43 of the vehicle 10 have slid with the fact that the wheels 43 of the vehicle 10 have slid. As the weather information, information about precipitation is employed.

The control device 80 includes a generating unit 83 for generating the wheel slide information. The generating unit 83 generates wheel slide information of the vehicle 10 and stores the generated wheel slide information in the storing unit 82 (storing step). The control device 80 additionally includes a wheel slide predicting unit 84 for calculating, at a timing later than the timing at which the wheel slide information is generated, a predicted wheel slide position where the wheels 43 of the vehicle 10 may possibly slide. The wheel slide predicting unit 84 calculates, based on the wheel slide information generated by the generating unit 83, the information indicating the state of the vehicle 10 and the weather information, a predicted wheel slide position where the wheels 43 of the vehicle 10 may possibly slide. The control device 80 includes an acquiring unit 87 for acquiring position information of the vehicle 10 on the rail. The acquiring unit 87 acquires position information of the vehicle 10 on the rail based on the axial rotational speed X2 (acquiring step). The storing step is performed by the generating unit 83. The acquiring step is performed by the acquiring unit 87.

The control device 80 includes a distance determining unit 85 for calculating a reach distance between the position of the vehicle 10 on the rail and the predicted wheel slide position ahead in the traveling direction of the vehicle 10. The distance determining unit 85 determines whether the reach distance is equal to or less than a predetermined distance. The distance determining unit 85 calculates the reach distance based on the axial rotational speed X2.

The control device 80 includes a brake control unit 86 for controlling the brake devices 50. More specifically, the brake control unit 86 controls the aperture of the control valve 62 by outputting a control signal determined by the brake instruction X6 to the control valve 62. By adjusting the aperture of the control valve 62, the amount of the air distributed through the supply channel 63 can be adjusted. In this way, the brake devices 50 are driven. Accordingly, the brake control unit 86 collectively controls all of the eight brake devices 50 through the single control valve 62 provided in the vehicle 10A. The control signal output from the brake control unit 86 is configured such that, as the brake instruction X6 increases, the braking force produced by the brake devices 50 increases.

The control device 80 includes a report control unit 89 for causing the display 77 to display a variety of information. More specifically, the report control unit 89 causes the display 77 to display a variety of information by outputting to the display 77 an image signal indicating a variety of information based on the current position of the vehicle 10 on the rail and the predicted wheel slide position on the rail. As the control device 80 includes the wheel slide determining unit 81, the storing unit 82 and the acquiring unit 87, the control device 80 partially serves as a wheel slide information generating device. As the control device 80 includes the wheel slide determining unit 81, the storing unit 82, the wheel slide predicting unit 84, the acquiring unit 87 and the report control unit 89, the control device 80 partially serves as a wheel slide predicting device.

The control device 80 may be formed by circuitry including one or more processors for performing various processes in accordance with computer programs (software). The control device 80 may be formed by one or more dedicated hardware circuits such as application-specific integrated circuits (ASICs) that perform at least some of the various processes, or by circuitry including a combination of such circuits. The processor includes processing circuitry such as a CPU, and a memory such as a RAM or ROM. The memory stores therein program codes or instructions configured to cause the CPU to perform processes. The memory, or a computer-readable medium, encompasses any kind of available media accessible by a general-purpose or dedicated computer. As shown in Fig. 1, the control device 80 is capable of communicating with the control devices 80 in the other three vehicles 10.

The following now describes a series of controls to determine wheel slide, which are performed by the control device 80. The control device 80 repeatedly performs a series of controls to determine wheel slide while the vehicle 10 is traveling. More specifically, the control device 80 performs a series of controls to determine wheel slide when any of the values of the axial rotational speed X2 detected by the rotation sensors 72 is determined to be larger than zero. The control device 80 in the vehicle 10A represents the four control devices 80 in the vehicles 10A to 10D and performs a series of controls to determine wheel slide.

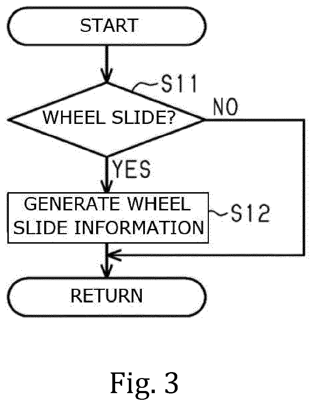

As shown in Fig. 3, once the control device 80 starts the series of controls to determine wheel slide, the control device 80 starts the process in a step S11. In the step S11, the wheel slide determining unit 81 in the control device 80 determines whether the wheels 43 of the vehicle 10 are sliding. If the wheels 43 of the vehicle 10 are sliding, some of the wheels 43 are stopped from rotating by the corresponding brake devices 50 and some of the values of the axial rotational speed X2 become or approach zero. On the other hand, the other wheels 43 are still rotating. Therefore, the four values of the axial rotational speed X2 vary significantly from each other. The wheel slide determining unit 81 calculates the variation among the values of the axial rotational speed X2 by subtracting the smallest value among the four values of the axial rotational speed X2 in the vehicle 10 from the largest value among the four values of the axial rotational speed X2 in the vehicle 10. When the variation among the values of the axial rotational speed X2 is equal to or more than a predetermined reference variation, the wheel slide determining unit 81 determines that the wheels 43 of the vehicle 10 are sliding. When the variation among the values of the axial rotational speed X2 is less than the predetermined reference variation, the wheel slide determining unit 81 determines that the wheels 43 of the vehicle 10 are not sliding. When determining that the wheels 43 of the vehicle 10 are not sliding in the step S11 (S11: NO), the control device 80 terminates the current series of controls to determine wheel slide. On the other hand, in the step S11, when determining that the wheels 43 of the vehicle 10 are sliding (S11: YES), the control device 80 proceeds to a step S12.

In the step S12, the generating unit 83 in the control device 80 generates wheel slide information of the vehicle 10 and stores the generated wheel slide information in the storing unit 82. To begin with, the acquiring unit 87 acquires the current position of the vehicle 10 on the rail. More specifically, the acquiring unit 87 of the control device 80 calculates the current speed of the vehicle 10 based on the largest value among the four values of the axial rotational speed X2 in the vehicle 10. Following this, the acquiring unit 87 calculates, based on the speed of the vehicle 10, the travel distance per unit time. The acquiring unit 87 repeatedly calculates the speed and travel distance at unit time intervals. The acquiring unit 87 further calculates a cumulative sum of the travel distance after the departure from a predetermined reference position to a current position in order to calculate the total travel distance and acquires, as the current position of the vehicle 10 on the rail, the position away from the reference position by the total travel distance. The generating unit 83 acquires the current position of the vehicle 10 on the rail, which is acquired by the acquiring unit 87, as the position of the vehicle 10 on the rail where the wheels 43 of the vehicle 10 have slid.

The generating unit 83 also acquires the speed of the vehicle 10 calculated in the above-described manner as the speed information of the vehicle 10 indicating the speed observed when the wheels 43 of the vehicle 10 have slid. The generating unit 83 further acquires the current brake instruction X6 as the deceleration information indicating the deceleration of the vehicle 10 observed when the wheels 43 of the vehicle 10 have slid. The generating unit 83 further acquires the total weight Y1 of the vehicle body 20 as the weight information of the vehicle 10 indicating the weight observed when the wheels 43 of the vehicle 10 have slid. The generating unit 83 further acquires the current weather information at the current position of the vehicle 10 on the rail as the weather information indicating weather at the position of the vehicle 10 on the rail observed when the wheels 43 of the vehicle 10 have slid. The generating unit 83 stores these pieces of information in the storing unit 82 as the wheel slide information of the vehicle 10 in association with the fact that the wheels 43 of the vehicle 10 have slid. In other words, the storing unit 82 stores the wheel slide information generated by the generating unit 83. After this, the control device 80 terminates the current series of controls to determine wheel slide.

Note that the control device 80 in the vehicle 10A performs the above-described controls in the steps S11 and S12 not only for the vehicle 10A but also for the other vehicles 10B to 10D in parallel.

The following now describes a series of controls to predict wheel slide, which are performed by the control device 80. The control device 80 repeatedly performs a series of controls to predict wheel slide while the vehicle 10 is traveling. More specifically, the control device 80 performs a series of controls to predict wheel slide when any of the values of the axial rotational speed X2 detected by the rotation sensors 72 is determined to be larger than zero. The control device 80 in the vehicle 10A represents the four control devices 80 in the vehicles 10A to 10D and performs a series of controls to predict wheel slide.

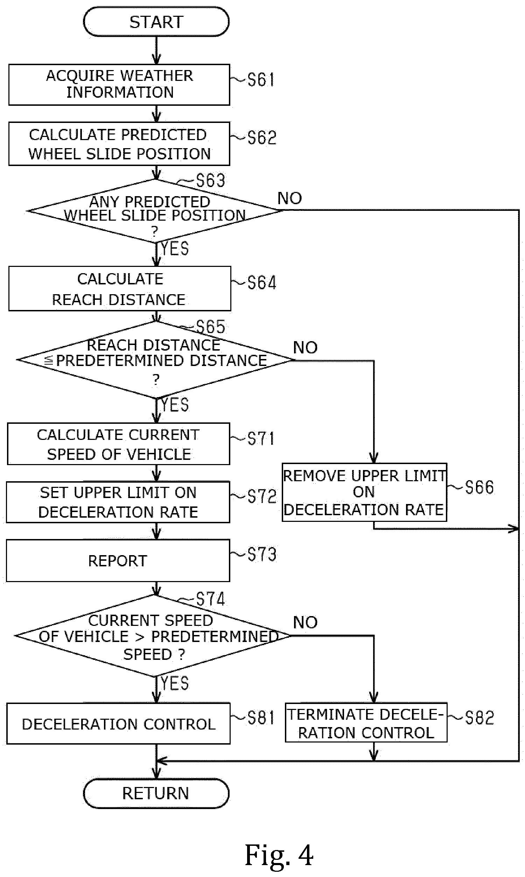

As shown in Fig. 4, once the control device 80 starts the series of controls to predict wheel slide, the control device 80 starts the process in a step S61. In the step S61, the control device 80 acquires weather information from the weather service center 300. The control device 80 also acquires the information indicating the state of the vehicle 10. After this, the control device 80 proceeds to a step S62.

In the step S62, the wheel slide predicting unit 84 in the control device 80 uses the wheel slide information at the time of performing the step S61, the information indicating the state of the vehicle 10 at the time of performing the step S61 and the weather information at the time of performing the step S61 in order to calculate a predicted wheel slide position, at which the wheels 43 of the vehicle 10 may possibly slide in the future.

In order to calculate the predicted wheel slide position, the wheel slide predicting unit 84 selects, as candidate predicted wheel slide positions, the positions of the vehicle 10 on the rail where the wheels 43 of the vehicle 10 have slid, which are included in the wheel slide information. For each candidate predicated wheel slide position, the wheel slide predicting unit 84 calculates a wheel slide likelihood score indicative of the likelihood of wheel slide for the wheels 43 of the currently traveling vehicle 10, in the following manner that is not part of the claimed invention but supports its disclosure.

For the candidate predicted wheel slide position, the wheel slide predicting unit 84 refers to the variety of information stored as the wheel slide information in association with the candidate predicted wheel slide position. More specifically, the wheel slide predicting unit 84 increases the wheel slide likelihood score calculated for a candidate predicted wheel slide position as the precipitation included in the corresponding wheel slide information decreases. Furthermore, the wheel slide predicting unit 84 increases the wheel slide likelihood score calculated for a candidate predicted wheel slide position as the speed of the vehicle 10 included in the corresponding wheel slide information decreases. Additionally, the wheel slide predicting unit 84 increases the wheel slide likelihood score calculated for a candidate predicted wheel slide position as the brake instruction X6 included in the corresponding wheel slide information as the deceleration information decreases. Furthermore, the wheel slide predicting unit 84 increases the wheel slide likelihood score calculated for a candidate predicted wheel slide position as the total weight Y1 of the vehicle body 20 included in the corresponding wheel slide information as the weight information of the vehicle 10 decreases.

The wheel slide predicting unit 84 also corrects the wheel slide likelihood score for each candidate predicted wheel slide position, in accordance with the current weather information and the current state of the vehicle 10. More specifically, the wheel slide predicting unit 84 performs the correction such that the wheel slide likelihood score calculated for each candidate predicted wheel slide position increases as the precipitation indicated by the current weather information increases. Furthermore, the wheel slide predicting unit 84 performs the correction such that the wheel slide likelihood score calculated for each candidate predicted wheel slide position increases as the total weight Y1 of the vehicle body 20 of the current vehicle 10 increases. In addition, the wheel slide predicting unit 84 performs the correction such that the wheel slide likelihood score calculated for each candidate predicted wheel slide position increases as the largest value of the four values of the axial rotational speed X2 of the current vehicle 10 increases.

Once the wheel slide likelihood score is calculated for each candidate predicted wheel slide position in the above-described manner, the wheel slide predicting unit 84 identifies, as the predicted wheel slide position, the candidate predicted wheel slide position having a wheel slide likelihood score of a predetermined reference value or more. After this, the control device 80 proceeds to a step S63.

In the step S63, the wheel slide predicting unit 84 in the control device 80 determines whether the predicted wheel slide position is ahead in the traveling direction of the vehicle 10. When determining that no predicted wheel slide positions are ahead in the traveling direction of the vehicle 10 in the step S63 (S63: NO), the control device 80 terminates the current series of controls to predict wheel slide. On the other hand, when determining that one or more predicted wheel slide positions are ahead in the traveling direction of the vehicle 10 in the step S63 (S63: YES), the control device 80 proceeds to a step S64.

In the step S64, the distance determining unit 85 in the control device 80 calculates a reach distance between the current position of the vehicle 10 on the rail and the predicted wheel slide position ahead in the traveling direction of the vehicle 10. In order to calculate the reach distance, the distance determining unit 85 calculates the speed of the vehicle 10 based on the axial rotational speed X2 and uses the calculated speed to calculate the current position of the vehicle 10 as described above. The distance determining unit 85 then uses the current position of the vehicle 10 on the rail and the predicted wheel slide position ahead in the traveling direction of the vehicle 10 to calculate the reach distance between these positions. When there are a plurality of predicted wheel slide positions, the distance determining unit 85 calculates the reach distance for each of the predicted wheel slide positions. After this, the control device 80 proceeds to a step S65.

In the step S65, the distance determining unit 85 in the control device 80 determines whether the shortest reach distance is equal to or less than a predetermined distance. The predetermined distance is, for example, several kilometers. When determining that the shortest reach distance is equal to or less than the predetermined distance in the step S65 (S65: YES), the distance determining unit 85 in the control device 80 proceeds to a step S71.

In the step S71, the control device 80 calculates the current speed of the vehicle 10. More specifically, the control device 80 calculates the speed of the vehicle 10 based on the largest value of the four values of the axial rotational speed X2 in the vehicle 10. After this, the control device 80 proceeds to a step S72.

In the step S72, the brake control unit 86 in the control device 80 sets the upper limit of the deceleration rate of the vehicle 10 at a predetermined deceleration rate. Here, the deceleration rate is the negative acceleration rate while the speed of the vehicle 10 is reduced and calculated as a positive value in the present embodiment. In order to determine the predetermined deceleration rate, experiments or the like are performed to obtain the deceleration rate of the vehicle 10 achieved by the brake control instructed by the highest brake instruction X6 under the assumption that the vehicle 10 is traveling on a rail with a gradient less than a predetermined value and the obtained deceleration rate is set as the highest deceleration rate. The predetermined deceleration rate is lower than the highest deceleration rate by approximately several dozen %. After this, the control device 80 proceeds to a step S73.

In the step S73, the report control unit 89 in the control device 80 causes the display 77 to display that the predicted wheel slide position is present in the vicinity of the vehicle 10 ahead in the traveling direction of the vehicle 10. The report control unit 89 also causes the display 77 to display that the upper limit of the deceleration rate of the vehicle 10 is set at the predetermined deceleration rate. The report control unit 89 causes the display 77 of only the vehicle 10A at the front to display a variety of information. After this, the control device 80 proceeds to a step S74.

In the step S74, the control device 80 determines whether the current speed of the vehicle 10 is higher than a predetermined speed. The speed of the vehicle 10 observed when the wheels 43 of the vehicle 10 slide depends on various conditions. For the speed of the vehicle 10 observed when the wheels 43 of the vehicle 10 have slid, a large number of values are in advance measured under all conditions. In the present embodiment, the predetermined speed is set at a value lower than the average of the measured speed values by approximately several dozen %. When determining that the current speed of the vehicle 10 is higher than the predetermined speed in the step S74 (S74: YES), the control device 80 proceeds to a step S81.

In the step S81, the brake control unit 86 in the control device 80 performs deceleration control to reduce the speed of the vehicle 10. More specifically, the brake control unit 86 reduces the speed of the vehicle 10 by controlling the brake devices 50 such that the braking force produced by the brake devices 50 is larger, by a predetermined reference braking force, than the braking force provided by the brake device 50 in accordance with the brake instruction X6. Here, the brake control unit 86 reduces the speed of the vehicle 10 to such an extent that the deceleration rate of the vehicle 10 does not exceed the predetermined deceleration rate. The control in the step S81 may be repeatedly performed multiple rounds, but the braking force provided by the brake devices 50 is larger by the reference braking force only in the first round of the step S81. The speed of the vehicle 10 makes a transition to be equal to or fall below the predetermined speed as the deceleration control is continuously performed while the series of controls to predict wheel slide are repeatedly performed. The report control unit 89 in the control device 80 causes the display 77 to display that the deceleration control is being in process. The report control unit 89 causes the display 77 of only the vehicle 10A at the front to display this information. After this, the control device 80 terminates the current series of controls to determine wheel slide.

When determining that the shortest reach distance is longer than the predetermined distance in the above-described step S65 (S65: NO), the control device 80 proceeds to a step S66. In the step S66, the brake control unit 86 in the control device 80 removes the upper limit set on the deceleration rate in the step S72 of the immediately prior or any of previous series of controls to predict wheel slide. If no upper limit is set on the deceleration rate at the time of performing the step S66, the brake control unit 86 continuously maintains the state where no upper limit is set on the deceleration rate. After this, the control device 80 terminates the current series of controls to predict wheel slide.

When determining that the current speed of the vehicle 10 is equal to or less than the predetermined speed in the above-described step S74 (S74: NO), the control device 80 proceeds to a step S82. In the step S82, the brake control unit 86 in the control device 80 terminates the deceleration control, which is started in the step S81 of the immediately prior or any of previous series of controls to predict wheel slide. More specifically, the brake control unit 86 controls the brake devices 50 such that the braking force produced by the brake devices 50 becomes equal to the braking force provided by the brake devices 50 in accordance with the brake instruction X6. If no deceleration control is performed at the time of perming the step S82, the brake control unit 86 continuously maintains the state where no deceleration control is performed. After this, the control device 80 terminates the current series of controls to predict wheel slide.

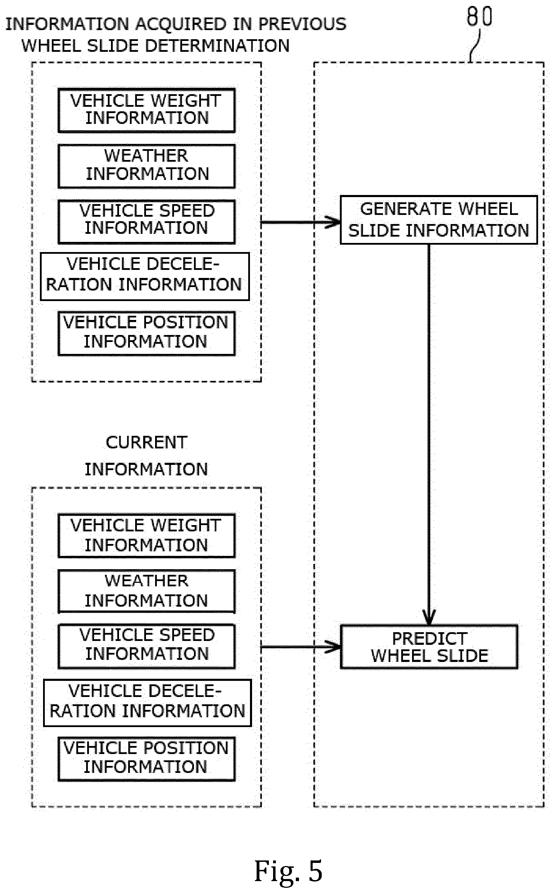

Regarding the above-described controls to determine wheel slide and to predict wheel slide, the following summarizes how the variety of information are exchanged and the controls are configured. As shown in Fig. 5, the controls to determine wheel slide generates the wheel slide information of the vehicle 10 by associating a variety of information acquired when the wheels 43 of the vehicle 10 have slid with the fact that the wheels 43 of the vehicle 10 have slid. In other words, the wheel slide information includes information acquired when it was determined in the past that the wheels 43 of the vehicle 10 slid. The controls to predict wheel slide calculates a predicted wheel slide position where the wheels 43 of the vehicle 10 may possibly slide in the future, based on the previous wheel slide information and current variety of information.

The following describes how the first embodiment produces effects.

If the wheels 43 of the vehicle 10, which travels on a rail, slide, the control device 80 performs the controls to determine wheel slide and determines that wheel slide occurs, and stores wheel slide information including the position information indicative of the position of the vehicle 10 on the rail where the wheels 43 have slid. Every time the wheels 43 of the vehicle 10 slide, wheel slide information is stored and accumulated in the storing unit 82 of the control device 80.

If the vehicle 10 is traveling with at least one piece of wheel slide information being stored in the storing unit 82 of the control device 80, the control device 80 calculates a predicted wheel slide position based on the wheel slide information. The position where the wheels 43 have slid, which is included in the wheel slide information, is used as a candidate predicted wheel slide position, and wheel slide likelihood score is calculated for the candidate predicted wheel slide position. In this way, for each of the candidate predicted wheel slide positions, the wheel slide likelihood score is calculated based on the state of the vehicle 10 at the time of the previous occurrence of wheel slide.

The control device 80 also corrects the wheel slide likelihood score for each candidate predicted wheel slide position, in accordance with the current state of the vehicle 10. More specifically, for example, if no precipitation is observed now, the wheel slide likelihood score is corrected to be lower. If the precipitation is more than zero, the wheel slide likelihood score is corrected to be higher. If any of the candidate predicted wheel slide positions have a wheel slide likelihood scores equal to or higher than a reference value, the candidate predicted wheel slide position in question is identified as the predicated wheel slide position. The wheel slide likelihood score for the same candidate predicted wheel slide position may vary depending on the current state of the vehicle 10. This means that a candidate predicted wheel slide position may be identified as a predicted wheel slide position or not depending on the current state of the vehicle 10.

It is assumed that the vehicle 10 is traveling and a predicted wheel slide position is ahead in the traveling direction of the vehicle 10. In this case, as the distance between the vehicle 10 and the predicted wheel slide position decreases, the upper limit of the deceleration rate of the vehicle 10 is set at the predetermined deceleration rate. In addition, the display 77 of the vehicle 10 displays that the predicted wheel slide position is near and that an upper limit is set on the deceleration rate. For example, if the driver of the vehicle 10 looks at what is displayed on the display 77, the driver may refrain from suddenly braking the vehicle 10. In this way, the deceleration rate of the vehicle 10 is highly likely to fall below the upper limit of the deceleration rate of the vehicle 10. On the other hand, if the driver of the vehicle 10 misses what is displayed on the display 77, the driver may attempt to suddenly brake the vehicle 10. Even if this happens, the deceleration rate of the vehicle 10 is limited to fall below the predetermined deceleration rate. Accordingly, the vehicle 10 is not actually suddenly braked in the case where the predicted wheel slide position is near.

If the driver of the vehicle 10 misses what is displayed on the display 77 and is not aware of the fact that the vehicle 10 is traveling near the predicted wheel slide position, the driver may possibly fail to decelerate the vehicle 10 and intend to keep traveling. In this case, if the speed of the vehicle 10 exceeds the predetermined speed, the braking force produced by the brake devices 50 increases to such an extent that the deceleration rate of the vehicle 10 does not exceed the predetermined deceleration rate. Accordingly, the speed of the vehicle 10 is gradually reduced before the vehicle 10 arrives at the predicted wheel slide position.

Advantageous effects of the first embodiment will be now described.
(1) If the wheels 43 of the vehicle 10 have slid at a given position on a rail in the past, the wheels 43 of the vehicle 10 may again possibly slide in the future if the vehicle 10 travels through the given position. Accordingly, in the controls to determine wheel slide, the generating unit 83 of the control device 80 generates wheel slide information including position information associating the position of the vehicle 10 on the rail at which the wheels 43 of the vehicle 10 have slid and the fact that the wheels 43 of the vehicle 10 have slid and stores the generated wheel slide information in the storing unit 82. If the wheel slide information is generated and stored in this manner, the wheel slide information can be used to calculate and predict a predicted wheel slide position, at which the wheels 43 of the vehicle 10 may possibly slide in the future.
(2) Even if the wheels 43 of the vehicle 10 have slid at a given position on a rail in the past, the wheels 43 of the vehicle 10 may or may not slide again at the given position when the vehicle 10 travels through the same given position, which is determined by various factors. For example, if the wheels 43 have slid at a given position despite the speed of the vehicle 10 being set at a low speed, the given position can be determined to be a position that is highly likely to cause wheel slide. Similarly, if the wheels 43 have slid at a given position despite the brake instruction X6 being low and the total weight Y1 of the vehicle body 20 being small, the given position can be determined to be a position that is highly likely to cause wheel slide. Accordingly, in the controls to determine wheel slide, the generating unit 83 of the control device 80 acquires, as the wheel slide information, the speed, brake instruction X6 and total weight Y1 of the vehicle 10 observed when the wheels 43 of the vehicle 10 have slid and stores the acquired wheel slide information in the storing unit 82. In the controls to predict wheel slide, the wheel slide predicting unit 84 of the control device 80 uses the wheel slide information including the speed information of the vehicle 10, the information indicative of the deceleration of the vehicle 10 and the information on the weight of the vehicle 10 to calculate a predicted wheel slide position. In this way, when compared with the case where the position at which the wheels 43 have slid in the past is simply calculated as the predicted wheel slide position, the predicted wheel slide position can be more accurately calculated since the circumstances of the vehicle 10 under which the wheels 43 have slid are taken into consideration.
(3) Among factors causing the wheels 43 of the vehicle 10 to slide, a change in coefficient of friction between the rail and the wheels 43 plays a large role. In particular, raining interposes water between the rail and the wheels 43, which reduces the coefficient of friction between the rail and the wheels 43. This is likely to cause wheel slide to occur in the wheels 43 of the vehicle 10. For this reason, if the wheels 43 have slid at a given position despite zero precipitation, the given position can be determined to be a position that is highly likely to cause wheel slide. Accordingly, in the controls to determine wheel slide, the generating unit 83 of the control device 80 acquires, as the wheel slide information, information including weather information at the position of the vehicle 10 on the rail at which the wheels 43 of the vehicle 10 have slid and stores the acquired information in the storing unit 82. In the controls to predict wheel slide, the wheel slide predicting unit 84 of the control device 80 uses the wheel slide information including the above-described weather information to calculate the predicted wheel slide position. In this way, when compared with the case where the position at which the wheels 43 have slid in the past is simply calculated as the predicted wheel slide position, the predicted wheel slide position can be more accurately calculated since the coefficient of friction between the rail and the wheels 43 observed when the wheels 43 have slid is taken into consideration.
(4) As described above, the change in coefficient of friction caused by raining and the state of the vehicle 10 affect the likelihood of wheel slide in the wheels 43 of the vehicle 10. Accordingly, in the controls to predict wheel slide, the predicted wheel slide position is calculated taking into consideration the current weather information, the current total weight Y1 of the vehicle body 20 of the vehicle 10, and the current four values of the axial rotational speed X2 in the vehicle 10, in addition to the wheel slide information. In this way, the predicted wheel slide position can be more accurately calculated.
(5) In the controls to predict wheel slide, when the shortest reach distance becomes equal to or less than the predetermined distance, in other words, when the vehicle 10 approaches the predicted wheel slide position, an upper limit is set for the deceleration rate of the vehicle 10 at a predetermined deceleration rate. Since the deceleration rate of the vehicle 10 is limited in this way, the vehicle 10 is never suddenly braked at and in the vicinity of the predicted wheel slide position. This can prevent the case where sudden braking provided by the brake devices 50 of the vehicle 10 causes the wheels 43 of the vehicle 10 to slide at and in the vicinity of the predicted wheel slide position.
(6) In the controls to predict wheel slide, when the shortest reach distance becomes equal to or less than the predetermined distance, in other words, when the vehicle 10 approaches the predicted wheel slide position, deceleration control is performed to reduce the speed of the vehicle 10 if the speed of the vehicle 10 is higher than the predetermined speed. The speed of the vehicle 10 makes a transition to become equal to or fall below the predetermined speed if the deceleration control is continuously performed while the controls to predict wheel slide are repeatedly performed. In this way, it is less necessary to control the brake devices 50 of the vehicle 10 such that the brake devices 50 produce braking force at and in the vicinity of the predicted wheel slide position. This can resultantly prevent the case where the braking force produced by the brake devices 50 of the vehicle 10 causes the wheels 43 of the vehicle 10 to slide.
(7) In the controls to predict wheel slide, when the predicted wheel slide position is ahead in the traveling direction of the vehicle 10, the display 77 is instructed to display that the predicted wheel slide position is present in the vicinity of the vehicle 10 ahead in the traveling direction of the vehicle 10. This allows the driver of the train 100 or the like to be capable of knowing that the predicted wheel slide position is ahead in the traveling direction of the vehicle 10.
(8) In the controls to predict wheel slide, when the shortest reach distance becomes equal to or less than the predetermined distance, in other words, when the vehicle 10 approaches the predicted wheel slide position, the display 77 is instructed to display that the predicted wheel slide position is present in the vicinity of the vehicle 10 ahead in the traveling direction of the vehicle 10. This allows the driver of the train 100 or the like to easily know that the vehicle 10 is traveling near the predicted wheel slide position when the vehicle 10 approaches the predicted wheel slide position. This makes it easy for the driver of the train 100 to manipulate the vehicle 10 at an appropriate timing or when the vehicle 10 approaches the predicted wheel slide position.
(9) In the controls to predict wheel slide, when the shortest reach distance becomes equal to or less than the predetermined distance, in other words, when the vehicle 10 approaches the predicted wheel slide position, the display 77 is instructed to display that an upper limit is set on the deceleration rate and that the deceleration control is being performed. This allows the driver of the train 100 or the like to easily know the controls being performed on the vehicle 10 by other than the driver.

### <Second Embodiment>

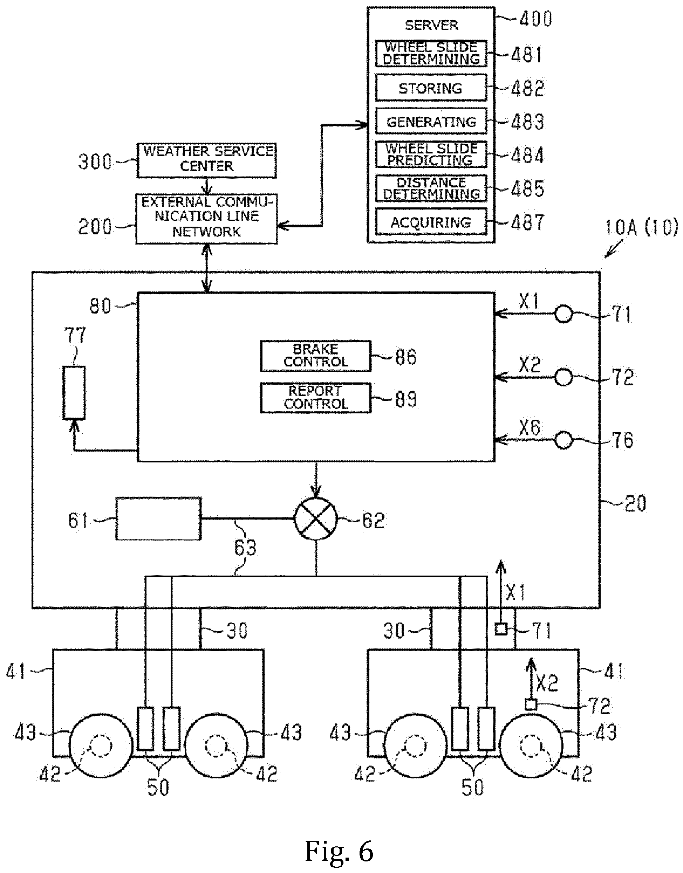

The following describes a second embodiment, not according to the claimed invention but supporting its disclosure, with reference to Fig. 6. In the following description of the second embodiment, the differences between the first and second embodiments are mainly discussed. The same elements as in the first embodiment will be denoted by the same reference numerals and descriptions thereof will be omitted or only briefly mentioned.

As shown in Fig. 6, the control device 80 is capable of communicating with a server 400 via the external communication line network 200. The server 400 is also capable of communicating with the weather service center 300 via the external communication line network 200.

In the second embodiment, the control device 80 includes the brake control unit 86 and the report control unit 89. On the other hand, the server 400 includes a wheel slide determining unit 481 for determining whether the wheels 43 of the vehicle 10 are sliding. In addition, the server 400 includes a storing unit 482 for storing the wheel slide information of the vehicle 10. The server 400 also includes a generating unit 483 for generating the wheel slide information. The server 400 further includes a wheel slide predicting unit 484 for calculating a predicted wheel slide position where the wheels 43 of the vehicle 10 may possibly slide. The server 400 further includes a distance determining unit 485 for calculating a reach distance between the position of the vehicle 10 on the rail and the predicted wheel slide position ahead in the traveling direction of the vehicle 10. The server 400 additionally includes an acquiring unit 487 for acquiring position information of the vehicle 10 on the rail. In the second embodiment, the wheel slide determining unit 481, storing unit 482, generating unit 483, wheel slide predicting unit 484, distance determining unit 485 and acquiring unit 487 of the server 400 have the same capabilities as the wheel slide determining unit 81, storing unit 82, generating unit 83, wheel slide predicting unit 84, distance determining unit 85 and acquiring unit 87 of the control device 80 relating to the first embodiment. As the server 400 includes the wheel slide determining unit 481, storing unit 482 and acquiring unit 487, the server 400 partially serves as a wheel slide information generating device. As the server 400 includes the wheel slide determining unit 481, storing unit 482, wheel slide predicting unit 484 and acquiring unit 487 and the control device 80 includes the report control unit 89, a system integrating together the server 400 and the control device 80 as a whole serves as a wheel slide predicting device. As the control device 80 includes the brake control unit 86, a system integrating together the server 400 and the control device 80 as a whole serves as a control device for a brake device, which can serve as a wheel slide predicting device.

In the second embodiment, the server 400 repeatedly performs the same series of controls to determine wheel slide as in the first embodiment while the vehicle 10 is traveling. The server 400 communicates with the control device 80 of the vehicle 10 at predetermined time intervals, so that the server 400 collects the axial rotational speed X2 of the vehicle 10, brake instruction X6 and the total weight Y1 of the vehicle 10.

The server 400 and control device 80 repeatedly perform the same series of controls to predict wheel slide as in the first embodiment while the vehicle 10 is traveling. The steps S61 to S66 and S71 included in the wheel slide prediction controls are performed by the server 400. In the steps S61, S64 and S71, the server 400 communicates with the control device 80 of the vehicle 10, to collect the axial rotational speed X2 of the vehicle 10, brake instruction X6 and total weight Y1 of the vehicle 10. The server 400 then uses the collected variety of information to perform the respective steps. In the step S65, the server 400 communicates with the control device 80 of the vehicle 10, to instruct the brake control unit 86 of the vehicle 10 to set an upper limit on the deceleration rate. In the step S66, the server 400 communicates with the control device 80 of the vehicle 10, to instruct the brake control unit 86 of the vehicle 10 to remove the upper limit set on the deceleration rate. On the other hand, the steps S72 to S82 included in the wheel slide prediction controls are performed by the control device 80.

Accordingly, the second embodiment can produce the advantageous effects (1) to (9) described above, which are produced also by the first embodiment. The second embodiment additionally provides the following advantageous effects.
(10) In the controls to determine wheel slide, the generating unit 483 in the server 400 generates wheel slide information based on the vehicle 10 and stores the generated wheel slide information in the storing unit 482. in other words, the wheel slide Information is stored in the storing unit 482 of the server 400, which is provided independently from the vehicle 10. The server 400 is not affected by impact caused by, for example, sudden braking provided by the brake devices 50 of the vehicle 10, and the wheel slide information stored in the storing unit 482 is thus not erased by such impact. In this way, the generated wheel slide information can be more securely stored, when compared with the case where the wheal slide information is stored in the control device 80 of the vehicle 10.
(11) The server 400 includes the wheel slide determining unit 481, storing unit 482, generating unit 483, wheel slide predicting unit 464, distance determining unit 486 and acquiring unit 487 and can be shared between a plurality of vehicles 10. With this configuration, it is not required to provide the above4isted constituents including the wheel slide determining unit 461 in each vehicle 10, which can reduce the increase in cost of the vehicle 10.

The foregoing embodiments can be modified as described below. The above embodiments and the following modifications can be combined with each other as long as they are technically consistent with each other.

In the above embodiments, the deceleration control can be modified. For example, the brake devices 50 may be controlled such that the brake devices 50 may provide braking force of a constant magnitude, irrespective of the position of the lever of the brake controller 76 resulting from the operation of the lever.

In the controls to predict wheel slide, the deceleration control in the step S81 may be skipped. For example, skipping the deceleration control does not cause any special problems when the calculated predicted wheel slide position Is present In an area where the speed of the vehicle 10 is not likely to become too high under normal travel conditions, for example, a curve with a large curvature.

In the controls to predict wheel slide, the predetermined deceleration rate in the step S72 may not be constant and depend on the speed of the vehicle 10. The predetermined deceleration rate may be variable but can be considered to be set in advance any way if calculating formulas, maps and the like are prepared in advance to calculate the predetermined deceleration rate.

In controls to predict wheel slide not according to the invention, the setting of an upper limit on the deceleration rate in the step S72 may be skippad. For example, skipping the setting of an upper limit on the deceleration rate does not cause any special problems when the calculated predicted wheel slide position is present in an area where the deceleration rate of the vehicle 10 Is not likely to become too high under normal travel conditions, for example, an ascending slope.

In the controls to predict wheel slide, the reporting in the step S73 may be skipped. For example, when the vehicle 10 is self-driven without a human, it is hardly required to issue a report on the display 77 of the vehicle 10.

The wheel slide information generated by the control device 80 of the vehicle 10 and the predicted wheel slide position calculated based on the wheel slide information may be transmitted to and shared with other vehicles. For example, if the wheels 43 of the vehicle 10 of the train 100 slide, the wheel slide information and the predicated wheel slide position may be transmitted to the vehicles of a later train on the same route. In this way, the vehicles of the later train can know the predicted wheel slide position even if no wheel slide occurs for the wheels of the later train.

In the controls to predict wheel slide, the calculation of the predicted wheel slide position in the step S62 can be modified. For example, the correction of the wheel slide likelihood score based on the current state of the vehicle 10 and the current weather information may be skipped. As another example, the calculation of the wheel slide likelihood score based on the wheel slide information may be omitted. More specifically, for example, the wheel slide likelihood score is not calculated and all of the positions stored as the wheel slide information may be treated as predicted wheel slide positions.

In the above first embodiment, the controls to predict wheel slide may be skipped. Even in this case, the wheel slide information is generated in the controls to determine wheel slide, and the generated wheel slide information is stored in the storing unit 82. An operator can aggregate the wheel slide information stored in the storing unit 82 and calculate the predicted wheel slide position.

In the controls to determine wheel slide, the information included in the wheel slide information can be modified as appropriate. The predicted wheel slide position can be predicted as long as the wheel slide information at least includes the position information associating the position of the vehicle 10 on the rail when the wheels 43 have slid with the fact that the wheels 43 of the vehicle 10 have slid. Alternatively, the wheel slide information may include another information other than the items illustrated in the above-described embodiments. The other information that can be included in the wheel slide information can be, for example, the date and time when the wheels 43 have slid, the temperature observed when the wheels 43 have slid, which is part of the weather information. The information indicating the deceleration is not limited to the brake instruction X6. For example, the information indicating the deceleration may be the deceleration rate of the vehicle 10 or the deceleration rate of the entire train 100.

In the above embodiments, the report device controlled by the report control unit 89 in the step S73 can be modified. For example, the report device may be a lamp or speaker.

## Claims

1. A device (80) for use with a railroad vehicle (10), the device (80) comprising:
processing circuitry (81, 83-87, 89); and
a memory (82) coupled to the processing circuitry (81, 83-87, 89);
wherein the processing circuitry (81, 83-87, 89) is configured to:
acquire position information of a railroad vehicle (10) on a rail;
determine, based on a rotational speed (X2) of a wheel (43) of the railroad vehicle (10), whether the wheel (43) is sliding; and
store in the memory (82), as wheel slide information, position information of the railroad vehicle (10) on the rail observed when the wheel (43) has slid
**characterized in that**
the processing circuitry (81, 83-87, 89) is further configured to:
calculate, based on the wheel slide information, a predicted wheel slide position where the wheel (43) possibly slides; and
control a brake device (50) of the railroad vehicle (10) such that a deceleration rate of the railroad vehicle (10) observed when the railroad vehicle (10) is on the predicted wheel slide position is equal to or less than a predetermined deceleration rate.

2. The device (80) of claim 1, wherein the wheel slide information includes at least one of speed information of the railroad vehicle (10) observed when the wheel (43) has slid, information indicative of deceleration of the railroad vehicle (10) observed when the wheel (43) has slid, and information regarding a weight of the railroad vehicle (10) observed when the wheel (43) has slid.

3. The device (80) of claim 1 or 2, wherein the wheel slide information includes information regarding weather observed when the wheel (43) has slid.

4. The device (80) of any of claims 1 to 3, wherein the processing circuitry (81, 83-87, 89) is further configured to:
cause a report device (77) of the railroad vehicle (10) to issue a report based on a current position of the railroad vehicle (10) on the rail and the predicted wheel slide position.

5. The device (80) of claim 4, wherein the processing circuitry (81, 83-87, 89) is further configured to cause the report device (77) to issue a report when a distance between the current position of the railroad vehicle (10) on the rail and the predicted wheel slide position becomes equal to or less than a predetermined distance.

6. The device (80) of any of claims 1 to 5, wherein the processing circuitry (81, 83-87, 89) is further configured to:
control a brake device (50) of the railroad vehicle (10) such that a speed of the railroad vehicle (10) observed when the railroad vehicle (10) is on the predicted wheel slide position is equal to or less than a predetermined speed.

7. A control method for a railroad vehicle comprising steps of:
acquiring position information of a railroad vehicle (10) on a rail;
determining, based on a rotational speed (X2) of a wheel (43) of the railroad vehicle (10), whether the wheel (43) is sliding;
storing in a storing unit (82), as wheel slide information, position information of the railroad vehicle (10) on the rail observed when the wheel (43) has slid;
calculating, based on the wheel slide information, a predicted wheel slide position where the wheel (43) possibly slides; and
controlling a brake device (50) of the railroad vehicle (10) such that a deceleration rate of the railroad vehicle (10) observed when the railroad vehicle (10) is on the predicted wheel slide position is equal to or less than a predetermined deceleration rate.

## Patentansprüche

1. Eine Vorrichtung (80) zur Verwendung mit einem Schienenfahrzeug (10), wobei die Vorrichtung (80) umfasst:
eine Verarbeitungsschaltung (81, 83-87, 89); und
einen Speicher (82), der mit der Verarbeitungsschaltung (81, 83-87, 89) gekoppelt ist;
wobei die Verarbeitungsschaltung (81, 83-87, 89) konfiguriert ist, um:
Positionsinformationen eines Schienenfahrzeugs (10) auf einer Schiene zu erfassen;
auf Grundlage einer Drehzahl (X2) eines Rads (43) des Schienenfahrzeugs (10) zu bestimmen, ob das Rad (43) rutscht; und
Positionsinformationen des Schienenfahrzeugs (10) auf der Schiene, die beobachtet wurden, als das Rad (43) gerutscht ist, als Radrutschinformationen in dem Speicher (82) zu speichern,
**dadurch gekennzeichnet, dass**
die Verarbeitungsschaltung (81, 83-87, 89) ferner dazu konfiguriert ist
auf Grundlage der Radrutschinformationen eine vorhergesagte Radrutschposition zu berechnen, an der das Rad (43) möglicherweise rutscht; und
eine Bremsvorrichtung (50) des Schienenfahrzeugs (10) so zu steuern, dass eine Verzögerungsrate des Schienenfahrzeugs (10), die beobachtet wird, wenn sich das Schienenfahrzeug (10) an der vorhergesagten Radrutschposition befindet, gleich einer oder weniger als eine vorbestimmte Verzögerungsrate ist.

2. Die Vorrichtung (80) nach Anspruch 1, wobei die Radrutschinformationen mindestens eines von Geschwindigkeitsinformationen des Schienenfahrzeugs (10), die beobachtet wurden, als das Rad (43) gerutscht ist, Informationen, die eine Verzögerung des Schienenfahrzeugs (10) anzeigen, die beobachtet wurde, als das Rad (43) gerutscht ist, und Informationen über ein Gewicht des Schienenfahrzeugs (10), das beobachtet wurde, als das Rad (43) gerutscht ist, enthalten.

3. Die Vorrichtung (80) nach Anspruch 1 oder 2, wobei die Radrutschinformationen Informationen über das Wetter, das beobachtet wurde, als das Rad (43) gerutscht ist.

4. Die Vorrichtung (80) nach irgendeinem der Ansprüche 1 bis 3, wobei die Verarbeitungsschaltung (81, 83-87, 89) ferner so konfiguriert ist, dass sie
eine Meldungsvorrichtung (77) des Schienenfahrzeugs (10) veranlasst, eine Meldung auf Grundlage einer aktuellen Position des Schienenfahrzeugs (10) auf der Schiene und der vorhergesagten Radrutschposition herauszugeben.

5. Die Vorrichtung (80) nach Anspruch 4, wobei die Verarbeitungsschaltung (81, 83-87, 89) ferner konfiguriert ist, um die Meldungsvorrichtung (77) zu veranlassen, eine Meldung auszugeben, wenn ein Abstand zwischen der aktuellen Position des Schienenfahrzeugs (10) auf der Schiene und der vorhergesagten Radrutschposition gleich oder kleiner als ein vorbestimmter Abstand wird.

6. Die Vorrichtung (80) nach irgendeinem der Ansprüche 1 bis 5, wobei die Verarbeitungsschaltung (81, 83-87, 89) ferner so konfiguriert ist, dass sie eine Bremsvorrichtung (50) des Schienenfahrzeugs (10) so steuert, dass eine Geschwindigkeit des Schienenfahrzeugs (10), die beobachtet wird, wen sich das Schienenfahrzeug (10) an der vorhergesagten Radruschposition befindet gleich oder kleiner als eine vorbestimmte Geschwindigkeit ist.

7. Ein Steuerverfahren für ein Schienenfahrzeug, umfassend die folgenden Schritte:
Erfassen von Positionsinformationen eines Schienenfahrzeugs (10) auf einer Schiene;
auf Grundlage einer Drehzahl (X2) eines Rades (43) des Schienenfahrzeugs (10) Bestimmen, ob das Rad (43) rutscht;
in einer Speichereinheit (82) als Radrutschinformationen Speichern von Positionsinformationen des Schienenfahrzeugs (10) auf der Schiene, die beobachtet wurden, als das Rad (43) gerutscht ist;
Berechnen einer vorhergesagten Radrutschposition, an der das Rad (43) möglicherweise rutscht, auf Grundlage der Radrutschinformationen; und
Steuern einer Bremsvorrichtung (50) des Schienenfahrzeugs (10) derart, dass eine Verzögerungsrate des Schienenfahrzeugs (10), die beobachtet wird, wenn sich das Schienenfahrzeug (10) an der vorhergesagten Radrutschposition befindet, gleich oder kleiner als eine vorbestimmte Verzögerungsrate ist.

## Revendications

1. Dispositif (80) destiné à être utilisé avec un véhicule ferroviaire (10), le dispositif (80) comprenant :
un circuit de traitement (81, 83-87, 89) ; et
une mémoire (82) couplée au circuit de traitement (81, 83-87, 89) ;
dans lequel le circuit de traitement (81, 83-87, 89) est configuré pour :
acquérir une information de position d'un véhicule ferroviaire (10) sur un rail ;
déterminer, sur la base d'une vitesse de rotation (X2) d'une roue (43) du véhicule ferroviaire (10), si la roue (43) est ou non en train de glisser ; et
stocker dans la mémoire (82), en tant qu'information de glissement de roue, l'information de position du véhicule ferroviaire (10) sur le rail qui a été observée lorsque la roue (43) a glissé,
**caractérisé en ce que** :
le circuit de traitement (81, 83-87, 89) est en outre configuré pour :
calculer, sur la base de l'information de glissement de roue, une position de glissement de roue prédite au niveau de laquelle la roue (43) est susceptible de glisser ; et
commander un dispositif de freinage (50) du véhicule ferroviaire (10) de telle sorte qu'un taux de décélération du véhicule ferroviaire (10) qui est observé lorsque le véhicule ferroviaire (10) est au niveau de la position de glissement de roue prédite soit égal ou inférieur à un taux de décélération prédéterminé.

2. Dispositif (80) selon la revendication 1, dans lequel l'information de glissement de roue inclut au moins une information parmi une information de vitesse du véhicule ferroviaire (10) qui a été observée lorsque la roue (43) a glissé, une information indicative de la décélération du véhicule ferroviaire (10) qui a été observée lorsque la roue (43) a glissé et une information qui concerne un poids du véhicule ferroviaire (10) qui a été observé lorsque la roue (43) a glissé.

3. Dispositif (80) selon la revendication 1 ou 2, dans lequel l'information de glissement de roue inclut une information qui concerne les conditions météorologiques qui ont été observées lorsque la roue (43) a glissé.

4. Dispositif (80) selon l'une quelconque des revendications 1 à 3, dans lequel le circuit de traitement (81, 83-87, 89) est en outre configuré pour :
forcer un dispositif de rapport (77) du véhicule ferroviaire (10) à délivrer un rapport sur la base d'une position courante du véhicule ferroviaire (10) sur le rail et de la position de glissement de roue prédite.

5. Dispositif (80) selon la revendication 4, dans lequel le circuit de traitement (81, 83-87, 89) est en outre configuré pour forcer le dispositif de rapport (77) à délivrer un rapport lorsqu'une distance entre la position courante du véhicule ferroviaire (10) sur le rail et la position de glissement de roue prédite devient égale ou inférieure à une distance prédéterminée.

6. Dispositif (80) selon l'une quelconque des revendications 1 à 5, dans lequel le circuit de traitement (81, 83-87, 89) est en outre configuré pour :
commander un dispositif de freinage (50) du véhicule ferroviaire (10) de telle sorte qu'une vitesse du véhicule ferroviaire (10) qui est observée lorsque le véhicule ferroviaire (10) est au niveau de la position de glissement de roue prédite soit égale ou inférieure à une vitesse prédéterminée.

7. Procédé de commande pour un véhicule ferroviaire, comprenant les étapes suivantes :
l'acquisition d'une information de position d'un véhicule ferroviaire (10) sur un rail ;
la détermination, sur la base d'une vitesse de rotation (X2) d'une roue (43) du véhicule ferroviaire (10), de si la roue (43) est ou non en train de glisser ; et
le stockage dans une unité de stockage (82), en tant qu'information de glissement de roue, d'une information de position du véhicule ferroviaire (10) sur le rail qui a été observée lorsque la roue (43) a glissé,
le calcul, sur la base de l'information de glissement de roue, d'une position de glissement de roue prédite au niveau de laquelle la roue (43) est susceptible de glisser ; et
la commande d'un dispositif de freinage (50) du véhicule ferroviaire (10) de telle sorte qu'un taux de décélération du véhicule ferroviaire (10) qui est observé lorsque le véhicule ferroviaire (10) est au niveau de la position de glissement de roue prédite soit égal ou inférieur à un taux de décélération prédéterminé.
